**Europäisches Patentamt**

**European Patent Office**

**Office européen des brevets**

(19)

(11) Veröffentlichungsnummer: **0 080 125**
**A1**

# EUROPÄISCHE PATENTANMELDUNG

(12)

(21) Anmeldenummer: 82110430.4

(22) Anmeldetag: 11.11.82

(51) Int. Cl.³: **B 01 D 53/02,** C 10 K 1/32, C 10 K 1/22

(30) Priorität: 24.11.81 DE 3146546

(43) Veröffentlichungstag der Anmeldung: 01.06.83 Patentblatt 83/22

(84) Benannte Vertragsstaaten: **AT DE FR GB IT NL SE**

(71) Anmelder: **Linde Aktiengesellschaft, Abraham-Lincoln-Strasse 21, D-6200 Wiesbaden (DE)**

(72) Erfinder: **Wagner, Norbert, Haus Nr. 16, D-8191 Schlederloh / über Wolfratshausen (DE)**

(74) Vertreter: **Schaefer, Gerhard, Dr., Linde Aktiengesellschaft Zentrale Patentabteilung, D-8023 Höllriegelskreuth (DE)**

(54) **Adsorber sowie Verfahren zum Betreiben des Adsorbers.**

(57) Ein Adsorber zur Zerlegung von Gasgemischen oder zur Gasreinigung enthält eine Adsorptionsmittelschüttung sowie Vorrichtungen zum Zu- und Abführen von Gasen. Abwechselnd wird zu zerlegendes bzw. zu reinigendes Gas und Regeneriergas durch die Adsorptionsmittelschüttung geleitet. Bei Druckschwankungen wird die Oberfläche der Adsorptionsmittelschüttung aufgewirbelt, und es entstehen Buckel und Mulden auf der Oberfläche, so daß sich für das zu zerlegende oder zu reinigende Gas unterschiedliche Adsorptionslängen ergeben.

Um der damit verbundenen Verschlechterung des Wirkungsgrades des Adsorbers zu begegnen, ist in dem erfindungsgemäßen Adsorber eine auf die Oberfläche der Adsorptionsmittelschüttung wirkende Glätteinrichtung vorgesehen, die von außen bedienbar ist, so daß die Oberfläche ohne Stillegung des Adsorbers während des Betriebes geglättet werden kann.

## Adsorber, sowie Verfahren zum Betreiben des Adsorbers

Die Erfindung betrifft einen Adsorber mit einem Behälter und einer in dem Behälter angeordneten Adsorptionsmittelschüttung, sowie mit Einrichtungen zum Zu- und Abführen von Gasen. Die Erfindung betrifft außerdem ein Verfahren zum Betreiben eines derartigen Adsorbers.

Adsorber werden in großem Umfang zur Zerlegung von Gasgemischen, beispielsweise Luft, und zur Gasreinigung eingesetzt. In einem geschlossenen Behälter ist eine Schüttung eines Adsorptionsmittels angeordnet, das aus einem selektiv auf bestimmte, aus dem Gas zu entfernende Gaskomponenten wirkenden Material besteht. Beispielsweise enthält die Schüttung Molekularsiebe. Abwechselnd nacheinander wird zu zerlegendes oder zu reinigendes Gas und Regeneriergas durch die Adsorptionsmittelschüttung hindurchgeleitet. Zunächst werden die zu entfernenden Gasbestandteile von der Adsorptionsmittelschüttung adsorbiert. Nach einiger Zeit, wenn das Adsorptionsmittel beladen ist, wird die Zufuhr des zu zerlegenden oder zu reinigenden Gases abgestellt und ein Regeneriergas durch die Adsorptionsmittelschüttung geleitet, das die adsorbierten Bestandteile austrägt. Anschließend wird erneut

Form. 6729 7.78

zu zerlegendes bzw. zu reinigendes Gas durch den Adsorber geleitet.

Bei Betriebsstörungen kommt es von Zeit zu Zeit vor, daß Druckschwankungen in den Gasströmen, die durch die Adsorptionsmittelschüttung geleitet werden, auftreten. Dann kann es passieren, daß ein Teil der Adsorptionsmittelschüttung aufgewirbelt wird und sich durch ungleichmäßiges Absetzen der aufgewirbelten Adsorptionsmittelteilchen an der Oberfläche der Schüttung Erhebungen und Mulden ausbilden. Ein derartiger Effekt kann sogar während des normalen Betriebes des Adsorbers auftreten, etwa wenn der Druckunterschied bei den einzelnen Schaltstellungen des Adsorbers (Beladung und Regenerierung) groß ist. Aufgrund der gewellten Oberfläche der Adsorptionsmittelschüttung variieren die Adsorptionslängen in Strömungsrichtung des zu zerlegenden oder zu reinigenden Gases sehr stark. Da aber die Menge der Gasmoleküle, die von der Adsorptionsmittelschüttung adsorbiert werden, unter anderem von der Verweilzeit des Gases in der Schüttung abhängt, wird sich bei Auftreten der beschriebenen Erhebungen und Mulden der Wirkungsgrad des Adsorbers sofort verschlechtern. Es war daher bisher üblich, in diesem Fall den betreffenden Adsorber stillzulegen und über ein Mannloch den Behälter zu betreten, um von innen die Adsorptionsmittelschüttung glatt zu streichen.

Dieses Vorgehen hat jedoch den großen Nachteil, daß der Adsorber für einige Zeit stillgelegt werden muß und daß überdies die Oberfläche der Adsorptionsmittelschüttung wegen der zumeist herrschenden beengten Platzverhältnisse in dem Behälter schwer zugänglich ist und ein Zugang teilweise ohne vorherige Entfernung zusätzlicher Einbauten, wie z.B. Gasverteilersiebe, überhaupt unmöglich ist. Die Betriebsunterbrechungen währen daher relativ lange.

Der Erfindung liegt die Aufgabe zugrunde, einen Adsorber zu schaffen, der betriebssicher und störungsfrei arbeitet.

Diese Aufgabe wird erfindungsgemäß gelöst durch eine auf die Oberfläche der Adsorptionsmittelschüttung wirkende Glätteinrichtung, die von der Behälteraußenseite aus bedienbar ist.

Erfindungsgemäß ist in dem Adsorber eine Glätteinrichtung vorgesehen, durch die die Oberfläche der Adsorptionsmittelschüttung bei Bedarf geglättet werden kann. Die Glätteinrichtung ist von außen bedienbar, so daß das Glattstreichen auch während des Betriebes des Adsorbers durchgeführt werden kann. Die Durchführung für die Bedienungseinrichtung der Glätteinrichtung durch die Behälteraußenwand ist für den höchstzulässigen auftretenden Betriebsdruck ausgelegt.

Durch den Erfindungsgegenstand wird der Vorteil erreicht, daß sich der Adsorber stets im optimalen Betriebszustand befindet, ohne daß hierzu Betriebsunterbrechungen in Kauf genommen werden müssen.

Bei einem Adsorber mit einem stehend angeordneten zylindrischen Behälter weist die Glätteinrichtung gemäß einer bevorzugten Ausgestaltung des Erfindungsgegenstandes einen sich über den Behälterquerschnitt erstreckenden Glättarm auf, der um seine vertikale Mittelachse drehbar ist.

Insbesondere ist eine Weiterbildung des Erfindungsgegenstandes von Vorteil, bei der in der vertikalen Mittelachse des Glättarmes die Abtriebswelle eines Winkelgetriebes befestigt ist, dessen Antriebswelle seitlich aus dem Behälter geführt ist.

Diese Anordnung erweist sich vor allem dann als günstig, wenn eine Durchführung in der Behälterachse nicht möglich ist, beispielsweise wenn in der Behälterachse Einrichtungen zur Zu- und Abführung von Gasen angeordnet sind. Die Antriebswelle weist beispielsweise an ihrem Ende einen Adapter zum Aufsetzen einer Kurbel oder eines Motors auf. Der aus dem Behälter herausstehende Abschnitt der Antriebswelle ist zweckmäßigerweise mit einer Überwurfmutter, welche fest mit dem Gehäuse verbindbar ist, gegen die Umgebung abgedichtet. Die Überwurfmutter wird nur zum Betätigen der Glätteinrichtung entfernt.

Bei einem Adsorber mit einem liegend angeordneten zylindrischen Behälter erweist es sich als günstig, wenn gemäß einer Ausgestaltung des erfindungsgemäßen Adsorbers die Glätteinrichtung einen sich über die Breite der Schüttung erstreckenden Glättarm aufweist, der in Richtung der Behälterlängsachse hin und her bewegbar ist.

In Weiterbildung des Erfindungsgegenstandes wird vorgeschlagen, daß der Glättarm an einem Rahmen befestigt ist, der auf an der Behälterwand befestigten Schienen läuft. Mit dieser Anordnung wird ein besonders verwindungsfreier Lauf des Glättarms erreicht.

Es erweist sich als zweckmäßig, wenn gemäß einer Ausführungsform des Erfindungsgegenstandes mit Abstand zu dem Glättarm ein zweiter Glättarm vorgesehen ist.

Gemäß einer vorteilhaften Weiterbildung des Erfindungsgegenstandes wird vorgeschlagen, daß der Glättarm aus zwei Flachprofilen zusammengesetzt ist, die sich beide jeweils über die Breite der Schüttung erstrecken, deren Oberkanten verbunden sind und die unter einem sich nach unten öffnenden Winkel zueinander stehen.

Mit dieser Ausbildung ist einerseits ein besonders stabiler Glättarm geschaffen und andererseits wird durch den gegen die Vertikale geneigten Anstellwinkel des Glättarms eine besonders gute Glättwirkung erzielt.

Ein erfindungsgemäßes Verfahren zum Betreiben eines Adsorbers, bei dem abwechselnd ein zu reinigendes Gas und ein Regeneriergas durch eine Adsorptionsmittelschüttung eleitet wird, ist dadurch gekennzeichnet, daß die Oberfläche der Adsorptionsmittelschüttung während des Betriebes des Adsorbers glattgestrichen wird.

Die Erfindung, sowie weitere Einzelheiten der Erfindung werden anhand von schematisch dargestellten Ausführungsbeispielen näher erläutert.

Hierbei zeigen:

Figur 1    eine Ausführungsform eines erfindungsgemäßen Adsorbers mit einem stehend angeordneten zylindrischen Behälter im Längsschnitt,

Figur 2    eine andere Ausführungsform eines erfindungsgemäßen Adsorbers mit einem liegend angeordneten zylindrischen Behälter im Querschnitt,

Figur 3    einen Schnitt entlang der Linie III-III in Figur 2.

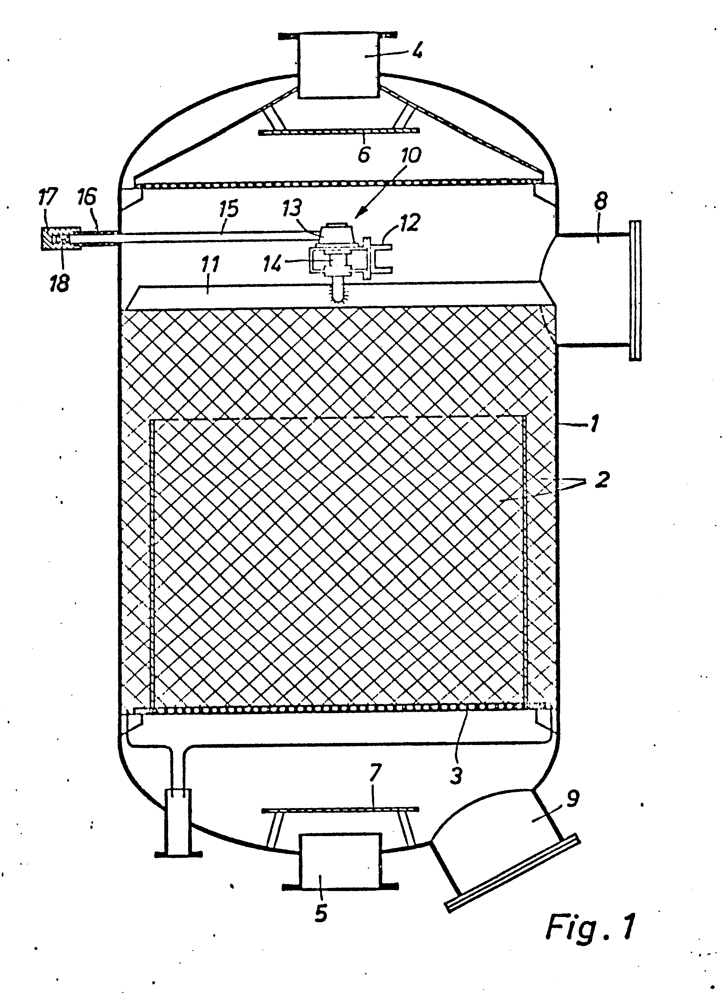

Der erfindungsgemäße Adsorber nach Figur 1 weist einen zylindrischen Behälter 1 auf, der stehend, d.h. mit vertikaler Zylinderachse, angeordnet ist. Innerhalb des Behälters 1 ist eine Schüttung 2 aus einem Adsorptionsmittel, z.B. Molekularsieben, vorgesehen, die auf einem gasdurchlässigen Rost 3 ruht, welcher sich über den Behälterquerschnitt er-

Form. 5729 7.78

streckt. An der Oberseite des Behälters 1, oberhalb der Schüttung 2, befindet sich eine Einrichtung 4 zur Zu- und Abführung von Gasen. Eine weitere Einrichtung 5 zur Zu- und Abführung von Gasen befinden sich am Boden des Behälters 1 unterhalb des Rostes 3. An der Innenseite der Einrichtungen 4, 5 sind Gasablenkbleche 6, 7 angeordnet, die für eine Verteilung der eintretenden Gasströme über den Behälterquerschnitt sorgen. An der Seite und am Boden des Behälters 1 sind Stutzen 8, 9 vorgesehen, die zum Einfüllen und Entleeren des Adsorptionsmittels, sowie als Mannlöcher dienen. Die Stutzen 8, 9 sind während des Betriebes des Adsorbers geschlossen.

Ein derartiger Adsorber weist beispielsweise eine Höhe von 2,6 m und einen Durchmesser von 1,9 m auf.

Erfindungsgemäß ist innerhalb des Behälters 1 eine Glätteinrichtung 10 vorgesehen, die einen Glättarm 11 aufweist, dessen Unterseite sich in Höhe der Oberfläche der Adsorptionsmittelschüttung 2 befindet. An einer U-förmigen Profilschiene 12, die sich oberhalb des Glättarmes 11 quer über den Behälter 1 erstreckt und die an den Behälterwänden befestigt ist, ist ein Winkelgetriebe 13 gehaltert. Die nach unten weisende Abtriebswelle 14 des Winkelgetriebes 13 ist in der vertikalen Mittelachse des Glättarms 11 befestigt, die Antriebswelle 15 des Winkelgetriebes 13 ist in horizontaler Richtung aus dem Behälter 1 geführt. Die Durchführung für die Antriebswelle 15 verläuft in einer Hülse 16, die dicht mit dem Behälter 1 verbunden und mit einer Überwurfmutter 17 verschlossen ist. Das aus der Hülse 16 ragende Ende der Antriebswelle 15 ist mit einem Adapter 18, beispielsweise einem Vierkant, versehen, der zum Aufsetzen einer Kurbel oder eines Antriebsmotors geeignet ist.

Beim Betrieb des erfindungsgemäßen Adsorbers wird zunächst ein Gas, das gereinigt oder zerlegt werden soll, durch die

Einrichtung 5 am Boden des Behälters 1 zugeführt. Das Gas verteilt sich über den Behälterquerschnitt und gelangt durch den Rost 3 in die Schüttung 2, durch die es nach oben strömt. Dabei werden die zu entfernenden Gasbestandteile durch das Adsorptionsmittel adsorbiert. Das gereinigte Gas tritt oben aus der Schüttung 2 aus und wird über die Einrichtung 4 abgeführt. Nach einiger Zeit, wenn das Adsorptionsmittel beladen ist, wird die Gaszufuhr abgeschaltet und anschließend von oben über die Einrichtung 4 ein Regeneriergas zugeführt. Das Regeneriergas durchströmt die Adsorptionsmittelschüttung von oben nach unten, nimmt dabei die adsorbierten Gasbestandteile auf und trägt sie über die Einrichtung 5 aus.

Bei einem Druckwechsel-Adsorptionsverfahren herrscht in der Regel eine Druckdifferenz von mindestens 6 bar zwischen dem zu zerlegenden bzw. zu reinigenden Gas und dem Regeneriergas. Beim Umschalten des Betriebszustandes können dabei Schaltstöße auftreten, durch die ein Teil der Adsorptionsmittelschüttung aufgewirbelt wird. Aber auch bei einem thermischen Adsorptionsverfahren, bei dem sich die beiden Gasströme auf im wesentlichen demselben Druck befinden und der Regeneriergasstrom lediglich eine höhere Temperatur aufweist, kommt es zu Betriebsstörungen, bei denen entsprechende Gasdruckschwankungen auftreten. Sobald aber die Schüttung 2 aufgewirbelt worden ist, verformt sich die ursprünglich ebene Oberfläche der Schüttung 2 und es bilden sich Erhebungen und Vertiefungen auf der Oberfläche. Aufgrund der daraus resultierenden unterschiedlichen Schichtdicke der Schüttung ist die Adsorptionslänge für das zu reinigende oder zu zerlegende Gas unterschiedlich groß, so daß an manchen Stellen eine deutlich verringerte Adsorption stattfindet.

Deshalb wird in gewissen Zeitabständen oder bei Bedarf, d.h. sobald die Reinheit des den Adsorber verlassenden Gases nachläßt, die Oberfläche der Schüttung 2 eingeebnet.

BAD ORIGINAL

Erfindungsgemäß erfolgt dieser Vorgang während des Betriebes des Adsorbers. Hierzu muß lediglich die Überwurfmutter 17 abgenommen und die Antriebswelle 15 gedreht werden. Die Drehbewegung wird über das Winkelgetriebe 13 auf den Glättarm 11 übertragen. Um eine Betätigung des Glättarms 11 während des Betriebes zu ermöglichen, muß die Durchführung der Antriebswelle 15 für den entsprechenden Gasdruck ausgelegt sein.

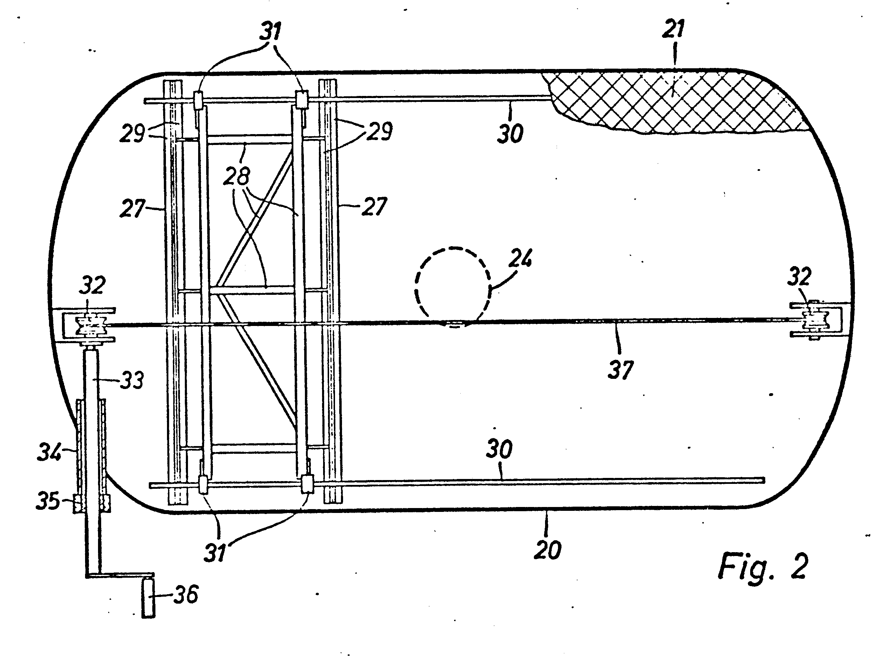

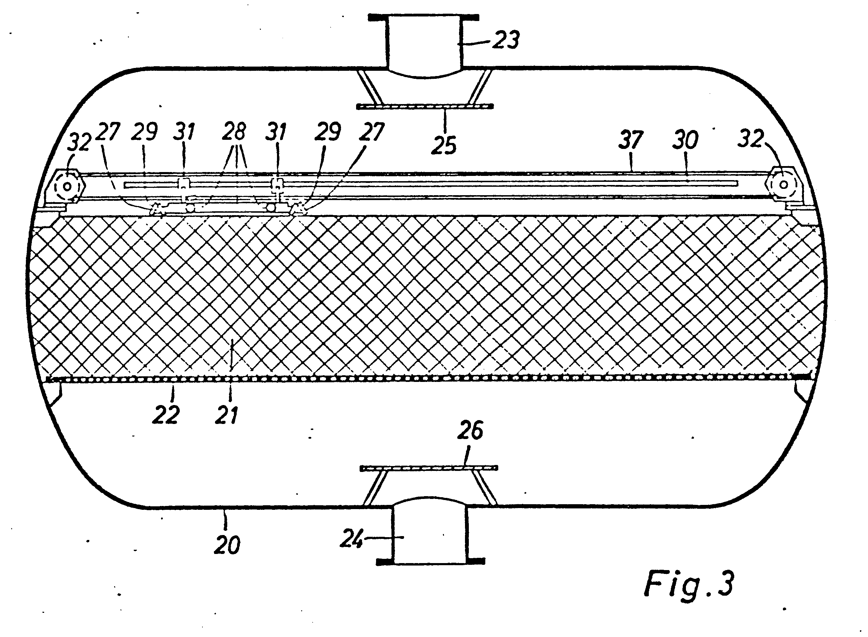

In den Figuren 2 und 3 sind zwei Schnittdarstellungen eines erfindungsgemäßen Adsorbers mit einem liegend angeordneten zylindrischen Behälter 20 gezeigt. In analoger Weise wie bei dem in Figur 1 gezeigten Adsorber ist auch hier eine Adsorptionsmittelschüttung 21 vorgesehen, die sich über den Behälterquerschnitt erstreckt und die auf einem gasdurchlässigen Rost 22 ruht. Einrichtungen 23, 24 zur Zu- und Abführung von zu reinigendem bzw. zu zerlegendem Gas sowie Regeneriergas befinden sich oberhalb und unterhalb der Schüttung 21 in den Behälterwänden. Gasablenkbleche tragen die Bezugszeichen 25 und 26.

Die erfindungsgemäße Glätteinrichtung enthält bei dieser Ausführungsform zwei Glättarme 27, die sich über die Breite der Schüttung 21 erstrecken. Die Glättarme 27 erstrecken sich quer zu ihrer Bewegungsrichtung und sind mit gegenseitigem Abstand voneinander an einem Rahmen 28 befestigt. Jeder Glättarm 27 besteht aus zwei Flachprofilen 29, deren Oberkanten verbunden sind und die unter einem sich nach unten öffnenden Winkel zueinander stehen. Der Rahmen 28, der aus Rohrstücken zusammengesetzt ist, läuft auf beiden Seiten auf Schienen 30, die an den einander gegenüberliegenden Seitenwänden des Behälters 20 befestigt sind. Die Schienen 30 sind als Rohre ausgebildet, die von an dem Rahmen 28 befestigten Gleitringen 31 umschlossen sind.

0080125

Zum Glattstreichen der Oberfläche der Schüttung 21 wird die Glätteinrichtung in Richtung der Behälterlängsachse hin- und hergezogen. Zu diesem Zweck ist an den Stirnseiten des Behälters 20 jeweils eine Umlenkrolle 32 befestigt, über die ein Endlosseil oder eine Endloskette geführt ist, die mit dem Rahmen 28 verbunden ist. Die eine der beiden Umlenkrollen 32 ist über eine Antriebswelle 33, die durch eine Durchführung 34 mit einer Dichtung 35 aus dem Behälter 20 geführt ist, von außen drehbar. Die Antriebswelle 33 trägt an ihrem Ende eine Kurbel 36. Je nach Drehrichtung an der Kurbel 36 bewegt sich die Glätteinrichtung nach links oder nach rechts. Dabei planieren die Glättarme 27 die Oberfläche der Schüttung 21.

BAD ORIGINAL

0080125

## Patentansprüche

1. Adsorber mit einem Behälter und einer in dem Behälter angeordneten Adsorptionsmittelschüttung, sowie mit Einrichtungen zum Zu- und Abführen von Gasen, gekennzeichnet durch eine auf die Oberfläche der Adsorptionsmittelschüttung (2,21) wirkende Glätteinrichtung (10), die von der Behälteraußenseite aus bedienbar ist.

2. Adsorber nach Anspruch 1 mit einem stehend angeordneten zylindrischen Behälter, dadurch gekennzeichnet, daß die Glätteinrichtung einen sich über den Behälterquerschnitt erstrechenden Glättarm (11) aufweist, der um seine vertikale Mittelachse drehbar ist.

3. Adsorber nach Anspruch 2, dadurch gekennzeichnet, daß in der vertikalen Mittelachse des Glättarms (11) die Abtriebswelle (14) eines Winkelgetriebes (13)befestigt ist, dessen Antriebswelle (15) seitlich aus dem Behälter (1) geführt ist.

4. Adsorber nach Anspruch 1 mit einem liegend angeordneten zylindrischen Behälter, dadurch gekennzeichnet, daß die

Form. 6729 7.78

Glätteinrichtung einen sich über die Breite der Adsorptionsmittelschüttung (21) erstreckenden Glättarm (27) aufweist, der in Richtung der Behälterlängsachse hin und her bewegbar ist.

5. Adsorber nach Anspruch 4, dadurch gekennzeichnet, daß der Glättarm (27) an einem Rahmen (28) befestigt ist, der auf an der Behälterwand befestigten Schienen (30) läuft.

6. Adsorber nach Anspruch 4 oder 5, dadurch gekennzeichnet, daß mit Abstand zu dem Glättarm (27) ein zweiter Glättarm vorgesehen ist.

7. Adsorber nach einem der Ansprüche 2 bis 6, dadurch gekennzeichnet, daß der Glättarm aus zwei Flachprofilen (29) zusammengesetzt ist, die sich beide jeweils über die Breite der Adsorptionsmittelschüttung (21) erstrecken, deren Oberkanten miteinander verbunden sind und die unter einem sich nach unten öffnenden Winkel zueinander stehen.

8. Verfahren zum Betreiben eines Adsorbers nach Anspruch 1, bei dem abwechselnd ein zu reinigendes Gas und ein Regeneriergas durch die Adsorptionsmittelschüttung geleitet wird, dadurch gekennzeichnet, daß die Oberfläche der Adsorptionsmittelschüttung während des Betriebes des Adsorbers glattgestrichen wird.

*Fig. 1*

Fig. 2

Fig.3

Europäisches
Patentamt

**EUROPÄISCHER RECHERCHENBERICHT**

0080125

Nummer der Anmeldung

EP 82 11 0430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 01 D 53/02 |
| X | FR-A- 981 968 (A.A. GODEL) * Seite 3, linke Spalte, Anspruch 2; Abbildungen 5,6 * | 1,2 | C 10 K 1/32 C 10 K 1/22 |
| | --- | | |
| X | DE-C- 539 732 (K. BEUTHNER) * Seite 1, Zeilen 1-5; Seite 2, Zeile 79 - Seite 3, Zeile 38; Abbildung 1 * | 1-3 | |
| | --- | | |
| X | DE-B-1 011 854 (METALLGESELLSCHAFT AG) * Spalte 1, Zeilen 1-6; Spalte 4, Zeilen 59-68; Spalte 5, Zeilen 4-9; Abbildung 1 * | 1,2 | |
| | ----- | | |

RECHERCHIERTE SACHGEBIETE (Int. Cl. 3)

B 01 D
C 10 K

Der vorliegende Recherchenbericht wurde für alle Patentansprüche erstellt.

| Recherchenort | Abschlußdatum der Recherche | Prüfer |
|---|---|---|
| DEN HAAG | 04-02-1983 | PYFFEROEN K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82